# FASCICULE DE BREVET EUROPEEN

(11) **EP 1 547 004 B1**
(45) Date de publication et mention de la délivrance du brevet: **27.09.2006**
(21) Numéro de dépôt: 03769530.1
(22) Date de dépôt: 27.08.2003
(51) Int. Cl.: G06K 19/07, G06K 19/077

(54) **PROCEDE DE COMMUNICATION PAR ANTENNE POUR CARTE A PUCE ET APPAREIL ASSOCIE**
ANTENNEN-KOMMUNIKATIONSVERFAHREN FUER EINE CHIPKARTE UND ZUGEHOERIGE VORRICHTUNG
ANTENNA COMMUNICATION METHOD FOR A CHIP CARD AND ASSOCIATED DEVICE

(30) Priorité: 30.08.2002 FR 0210794
(43) Date de publication de la demande: 29.06.2005
(73) Titulaire: STMicroelectronics S.A., 92120 Montrouge (FR)
(72) Inventeur: MONSACRE, Olivier, F-92340 Bourg La Reine (FR)
(74) Mandataire: Bentz, Jean-Paul
(86) Numéro de dépôt international: PCT/FR2003/002594
(87) Numéro de publication internationale: WO 2004/021271

(56) Documents cités:
- EP-A1- 1 143 379
- WO-A-02/056247
- WO-A1-01/84492
- GB-A- 2 309 108
- GB-A- 2 358 991
- JP-A- 2002 236 901
- JP-A- 2002 279 377
- US-A- 5 598 032
- US-A- 6 111 303

## Description

L'invention concerne les cartes à puce, et en particulier les procédés de communication d'une carte à puce avec un appareil extérieur.

Les cartes à puce deviennent un support répandu pour contenir et transférer des informations de différents types, notamment pour des transactions bancaires, pour des titres de transport, des informations de santé ou encore pour l'identification. Les cartes à puce sont habituellement logées dans une carte en plastique, telle qu'une carte bancaire. Ces cartes présentent habituellement une mémoire et un processeur destinés à assurer le stockage et le traitement de données. La carte à puce est classiquement insérée dans un lecteur de carte qui effectue un contact électrique avec des contacts électriques de la carte.

La norme ISO 7816 définit les caractéristiques des cartes à puce les plus répandues. Cette norme est ainsi utilisée pour définir les caractéristiques de cartes SIM ou de cartes bancaires. La norme ISO 7816-2 définit le nombre, la fonction et la position des contacts électriques de surface de la puce avec une interface annexe. Les contacts de surfaces sont appelés "contact" dans la version française de la norme ISO 7816-2, et sont appelés "Pin" dans la version anglaise de cette norme. Les contacts de surface sont référencés C1 à C8 dans cette norme. Le contact C1, également désigné par Vcc, est utilisé pour effectuer une connexion de puissance par laquelle la puce de la carte est alimentée en puissance. Le contact C2, également désigné par RST ou Reset, transmet un signal de commande extérieur requérant le lancement d'une séquence d'instructions de réinitialisation de la puce. Le contact C3, également désigné par CLK, transmet à la puce un signal d'horloge. Le contact C5, également désigné par GND, fournit une masse électrique commune au circuit intégré de la puce et au dispositif connecté à la puce. Le contact C6, également appelé Vpp, est utilisé pour programmer une éventuelle EEPROM de la puce. Le contact C7, également désigné par I/O, fournit un canal de communication entre le dispositif connecté et la puce. La norme ISO 7816-2 n'a pas encore affecté l'utilisation des contacts C4 et C8.

Les normes ISO 14443 et ISO 15693 proposent d'inclure une antenne passive dans la carte afin de communiquer par radiofréquences avec un dispositif extérieur.

La norme ISO 14443 définit notamment un protocole de communication radiofréquences qui permet idéalement de communiquer jusqu'à 20 centimètres de l'antenne. La distance de communication fournie par l'antenne est cependant limitée. La vitesse de communication est également limitée par la fréquence de modulation.

La norme ISO 15693 décrit un autre protocole de communication, qui permet de communiquer à une distance plus grande qu'avec la norme ISO 14443, avec cependant une vitesse de communication moindre. La distance de communication fournie est cependant encore relativement réduite.

Le document GB-A-2 309 108 décrit un support pour carte à puce muni de contacts électriques. Ces contacts sont destinés à venir en contact avec des contacts électriques d'une carte à puce insérée dans le support. Les contacts électriques du support sont connectés à une boucle d'antenne afin de permettre de modifier les capacités d'émission/réception de la carte à puce insérée dans le support. La carte à puce comprend des emplacements mémoire connectés à des plots de contact à la surface de la carte à puce.

Le document US-5 598 032 décrit un procédé de fabrication d'une carte à puce sans contact. Durant le procédé, on ménage une cavité dans un corps de carte, laissant apparaître des bornes de connexion à une antenne. Un module électronique est alors placé dans la cavité.

Le document EP-A-1 143 379 décrit un procédé de fabrication d'une carte à puce mixte. La carte à puce comporte deux couches entre lesquelles se loge un circuit électrique secondaire. Un micromodule, encastré dans la carte réalise un circuit électrique principal. Ce circuit électrique principal joue le rôle d'interface avec un lecteur de carte à puce. Des puits de connexion entre les deux circuits ne sont pas réalisés de la même façon et au même moment selon chaque procédé. Ces puits sont remplis de colle conductrice qui permet d'établir des connexions entre les deux circuits.

Le document JP 2002 23 69 01 décrit un téléphone muni d'un corps dans lequel est ménagé une antenne. Cette antenne est connectée à des plots venant en contact avec des contacts électriques de surface d'une carte à puce. La carte à puce est alors apte à communiquer par l'intermédiaire de l'antenne réalisée sur le corps du téléphone. Le préambule des revendications 1 et 3 est constitué par les caractéristiques décrites dans ce document.

Le document US-A-6 111 303 décrit une carte à puce intégrant une antenne de communication formée d'un enroulement.

Le document JP 2002 27 93 77 illustre un support de carte SIM muni d'une antenne. Une carte SIM peut être logée dans le support pour communiquer par l'intermédiaire de l'antenne.

De façon générale, les antennes de ces cartes à puces présentent une portée limitée. De plus, leur portée est fortement affectée par leur environnement. De façon générale, la présence de pièces métalliques -en partiçulier une batterie ou d'autres circuits électriques d'un dispositif dans lequel la carte est placée-détériorent la portée de la carte. En outre, certaines cartes de format réduit -par exemple une carte SIM-impliquent des performances de l'antenne réduites.

Il existe donc un besoin, que l'invention vise à satisfaire, pour un procédé de communication, une carte à puce et un appareil résolvant un ou plusieurs de ces problèmes.

La présente invention est telle que définie dans les revendications.

L'invention sera mieux comprise à la lecture de la description qui suit et à l'examen des figures qui l'accompagnent. Les figures montrent:
- figure 1, une représentation schématique de la géométrie d'une carte SIM;
- figure 2, un schéma bloc d'une première variante de puce selon l'invention;
- figure 3, un schéma bloc d'une deuxième variante de puce selon l'invention;
- figure 4, une représentation schématique d'un téléphone cellulaire selon l'invention.

L'invention propose de communiquer avec une carte à puce en couplant des contacts de surface de la carte avec une antenne d'un appareil annexe. La carte à puce peut alors utiliser l'antenne de l'appareil annexe pour communiquer sans contact avec d'autres appareils. Lorsque des contacts de surface de la carte à puce sont couplés à des contacts de l'appareil connectés à l'antenne, des signaux électriques sont émis entre les contacts de surface et l'antenne.

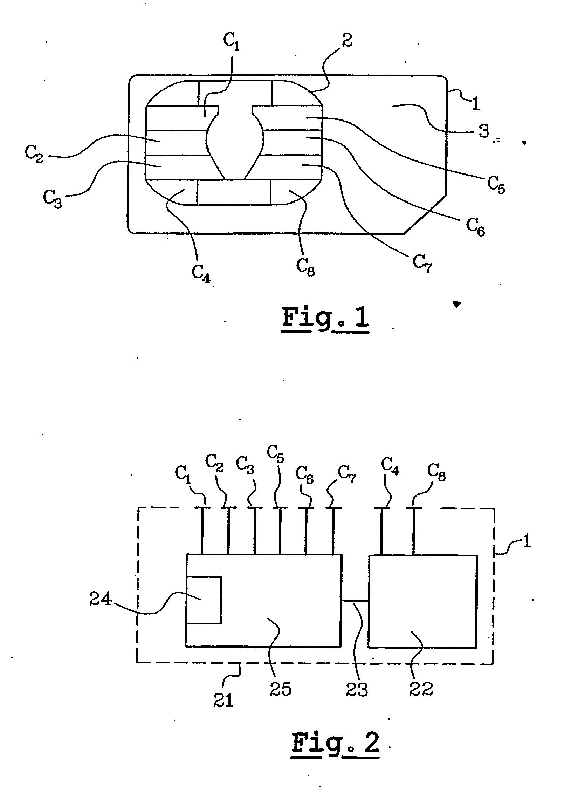

La figure 1 représente schématiquement la géométrie d'une carte SIM, au format d'une norme GSM. La carte SIM est un exemple particulier d'une carte à puce dont la carte est au format de la norme générique ISO 7816-1, et dont la puce est au format de la norme générique ISO 7816-2. La carte 1 présente une interface de contact 2 réalisée sur un corps de carte 3. L'interface de contact 2 présente des contacts de surface C1 à C8 tels que définis dans la norme ISO 7816-2.

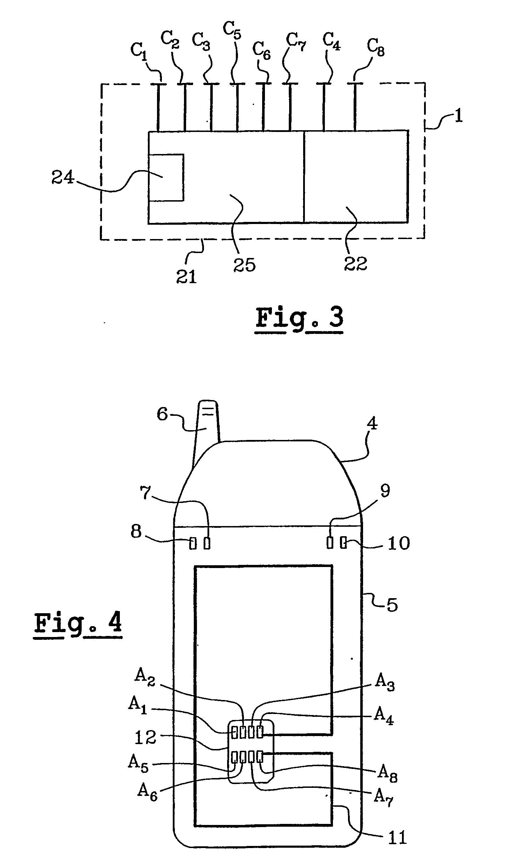

Dans les variantes de puces 21 représentées aux figures 2 et 3, une interface radiofréquence 22 est associée à un module de traitement 25. Un module de traitement associé à une interface radiofréquence couvrira par la suite à la fois :
- l'alternative dans laquelle l'interface radiofréquence 22 est un module indépendant du module de traitement, connecté au module de traitement 25, et
- l'alternative dans laquelle le module de traitement 25 intègre l'interface radiofréquence 22.

La figure 2 représente un schéma bloc de la première alternative de structure de puce 21 placée dans une carte 1 selon l'invention. La puce 21 comprend un module de traitement 25 connecté à une interface radiofréquence 22 par une connexion ou liaison 23 d'un type approprié.

La figure 3 représente un schéma bloc de la deuxième alternative de structure d'une puce 21. Dans cette alternative, l'interface radiofréquence 22 est intégrée dans le module de traitement 25.

Suivant ces variantes, le module de traitement 25 est notamment prévu pour réaliser diverses fonctions logiques usuelles d'une carte à puce. On peut notamment utiliser un microcontrôleur adéquat comme module de traitement 25. Le module de traitement 25 est par exemple connecté, de façon connue en soi, aux contacts de surface C1 à C3 et C5 à C7. L'interface radiofréquence 22 est connectée aux contacts de surface C4 et C8. L'interface radiofréquence 22 est prévue pour traiter ou générer des signaux électriques à des fréquences adéquates.

La puce 21 de la carte 1 peut ainsi générer des signaux électriques radiofréquences par l'intermédiaire de l'interface radiofréquence 22. Comme cela sera détaillé ultérieurement, cette structure permet à la puce 21, et en particulier au module de traitement 25, d'utiliser l'antenne d'un appareil annexe pour communiquer par radiofréquence. La portée de communication de la carte à puce 1 n'est donc pas limitée par les dimensions de cette carte. Ainsi, une même carte à puce, même de la dimension d'une carte SIM au format d'une norme GSM, peut être utilisée pour de nombreuses applications exigeant des portées de communication sensiblement différentes. L'utilisation éventuelle des contacts de surface C4 et C8 de la norme ISO 7816-2, pour la transmission de signaux électriques avec l'extérieur, est en outre aisée à mettre en oeuvre car ces contacts sont préexistants et non affectés dans cette norme à la date de dépôt de la présente demande.

L'interface radiofréquence 22 est prévue pour traiter ou générer des signaux électriques adéquats pour la communication de données entre la puce 1 et des appareils extérieurs.

Dans les exemples des figures 2 et 3, la puce 21 présente une ou plusieurs mémoires 24. Ces mémoires 24 sont par exemple intégrées dans le module de traitement 25 de la puce 21. Ces mémoires 24 sont prévues pour stocker différentes informations utiles. On peut notamment utiliser une ou plusieurs mémoires 24 choisies parmi les mémoires mortes ROM, les mémoires vives RAM, les mémoires flash, les mémoires effaçables et programmables électriquement EEPROM, ou une quelconque autre mémoire embarquée adéquate.

Bien que cela n'ait pas été détaillé, il est clair que la carte à puce peut également comprendre sa propre antenne de façon connue en soi, afin de pouvoir communiquer avec l'extérieur sans nécessiter la présence d'un appareil lui fournissant une antenne.

On va maintenant détailler le fonctionnement d'un appareil coopérant avec la carte à puce, dont un exemple est fourni à la figure 4. La spécificité d'un appareil selon l'invention est de disposer d'une interface de contact présentant deux contacts susceptibles d'être couplés à des contacts de surface d'une carte à puce 1 décrite précédemment. Les deux contacts de l'appareil sont connectés à une antenne. Un tel appareil permet à la carte à puce 1 d'utiliser l'antenne 11 par l'intermédiaire du couplage des contacts de l'appareil et de la carte. Un tel appareil permet alors d'accroître la portée de communication de la carte à puce 1.

La figure 4 présente un téléphone cellulaire 4 prévu pour fonctionner avec une carte à puce 1 décrite auparavant. On entend par téléphone cellulaire tout appareil apte à réaliser la fonction de téléphonie portable: ce terme inclut donc les organiseurs -aussi appelés PDA en anglais- munis d'une fonction de communication GSM et tout autre appareil similaire. Le téléphone 4 présente de façon connue en soi un corps de téléphone 5, une antenne de communication GSM 6 et des contacts d'alimentation 7 à 10 destinés à être couplés à une batterie amovible non représentée. Le corps 5 présente en outre un logement 12 apte à recevoir une carte à puce d'un format donné. Une interface de couplage comprenant les contacts A1 à A8 est disposée par exemple dans le fond du logement 12. Les contacts A1 à A8 sont disposés de façon à être couplés par contact électrique respectivement aux contacts de surface C1 à C8 d'une carte à puce 1 introduite dans le logement 12. Pour les raisons évoquées précédemment, on utilise de préférence une interface de connexion de l'appareil conforme à la norme ISO 7816-2.

Les contacts A4 et A8 de l'appareil présentent une connexion à une antenne 11. L'antenne peut être adaptée pour communiquer dans des bandes de fréquences prédéfinies, telles que les bandes de fréquence de porteuse spécifiées dans la norme ISO 14443, ISO 15693 ou ISO 18000. L'antenne présente forme ainsi un circuit résonant à une ou plusieurs fréquences choisies. L'antenne 11 représentée est réalisée sous forme de piste imprimée sur un support mais on peut également envisager tout type d'antenne adéquat. On peut également munir l'antenne d'éléments électroniques passifs ou actifs pour notamment réaliser une adaptation d'impédance. On peut également envisager de disposer un amplificateur sur la connexion de l'antenne aux contacts de l'appareil.

Dans la variante du téléphone 4 représentée, l'antenne 11 est solidaire du corps 5 du téléphone. L'antenne 11 est par exemple placée sur un emplacement lui fournissant une portée optimale, emplacement qui peut être déterminé par l'homme de métier.

On peut également prévoir d'implanter l'antenne 11 sur une batterie amovible du téléphone cellulaire. Une telle implantation peut permettre à un utilisateur de changer de batterie pour connecter la carte à puce 1 à l'antenne 11 du téléphone, en conservant son téléphone d'origine. On peut notamment prévoir d'ajouter ou d'affecter des contacts électriques sur le téléphone pour fournir une connexion d'une carte à puce placée dans le corps, avec une antenne 11 placée dans la batterie. On peut également prévoir d'implanter sur une batterie, une interface de couplage à une carte à puce et une antenne connectée à des contacts de cette interface.

On peut également envisager d'autres types d'appareils, tels que des véhicules, des étuis ou supports pour carte à puce, des appareils d'écoute portables, ou des dispositifs de stockage, tels que des containers ou des cartons. On peut notamment prévoir un véhicule automobile muni d'une antenne connectée à une interface de couplage de carte à puce disposée à l'intérieur de l'habitacle. L'antenne peut par exemple être adaptée pour communiquer avec un péage pour réaliser une application de télépéage. On peut notamment envisager la détection d'un abonnement enregistré sur la carte, ou l'enregistrement d'un débit sur un compte associé à la carte à puce. On peut également envisager des étuis ou supports de carte munis d'une antenne connectée à une interface de couplage de carte à puce. Les appareils munis d'une telle interface de couplage peuvent également inclure une antenne active, afin d'accroître la portée de communication de la carte à puce.

Les impédances respectives de l'antenne de l'appareil et des contacts de surface C4 et C8 de la carte à puce sont adaptées pour présenter une fréquence de résonance adéquate pour la bande de fréquence de modulation choisie.

## Revendications

1. Procédé de communication, comprenant les étapes de:
- fourniture d'un téléphone cellulaire (4) muni d'un corps, d'une batterie amovible, d'au moins une antenne (11), et d'au moins deux contacts (A4, A8) connectés à l'antenne (11);
- fourniture d'une carte à puce (1) présentant une puce (21) munie :
- d'au moins deux contacts de surface (C4, C8);
- d'un module de traitement (25);
- d'une interface radiofréquence (22) associée au module de traitement (25) et connectée aux contacts de surface (C4, C8) de la carte (1), les contacts de surface de la carte étant couplés aux contacts (A4, A8) du téléphone (4);
- transmission de signaux électriques entre les contacts de surface de la carte et l'antenne ;
**caractérisé en ce que** :
- l'antenne est solidaire de la batterie amovible et est extérieure à la puce.

2. Procédé selon la revendication 1, **caractérisé en ce que** la carte à puce fournie est au format de la norme ISO 7816-2, et **en ce que** les contacts de surface de la carte sont les contacts C4 et C8.

3. Téléphone cellulaire (4) présentant :
- un corps (5) ;
- une batterie amovible ;
- une antenne (11) ;
- une interface de couplage (A1-A8) susceptible d'être couplée à une carte à puce (1) et présentant deux contacts (A4, A8) connectés à l'antenne (11) et susceptibles d'être couplés à des contacts de surface (C4, C8) d'une dite carte à puce (1) ;
**caractérisé en ce que** :
- l'antenne est solidaire de la batterie amovible.

4. Téléphone cellulaire selon la revendication 3, **caractérisé en ce que** :
- les contacts du téléphone sont susceptibles d'être couplés à des contacts C4 et C8 d'une carte à puce au format de la norme ISO 7816-2.

5. Téléphone cellulaire selon la revendication 3 ou 4, **caractérisé en ce que** le téléphone cellulaire est un organiseur.

6. Téléphone cellulaire selon l'une des revendications 3 à 5, **caractérisé en ce que** l'antenne est active.

## Claims

1. Communication method, comprising the following steps:
- supply of a cell phone (4) provided with a body, a removable battery, at least one antenna (11) and at least two pins (A4, A8) connected to the antenna (11);
- supply of a smart card (1) having a chip (21) supplied with:
• at least two surface pins (C4, C8);
• a processing module (25);
• a radio-frequency interface (22) associated with the processing module (25) and connected to the surface pins (C4, C8) of the card (1), the surface pins of the card being coupled to the pins (A4, A8) of the cell phone (4);
• transmission of electrical signals between the surface pins of the card and the antenna,
**characterised in that** the antenna is fixed to the removable battery and is external to the chip.

2. Method according to claim 1, **characterised in that** the supplied smart card is in the format given in ISO 7816-2 standard and **in that** the surface pins of the card are pins C4 and C8.

3. Cell phone (4) with:
- a body (5);
- a removable battery;
- an antenna (11);
- a coupling interface (A1 - A8)adapted to be coupled to a smart card (1) and having two pins (A4, A8) connected to the antenna (11) and adapted to be coupled to surface pins (C4, C8) of a said smart card (1), **characterised in that** the antenna is fixed to the removable battery.

4. Cell phone according to claim 3, **characterised in that**:
- the telephone pins are adapted to be coupled to pins C4 and C8 of a smart card in the format of the ISO 7816-2 standard.

5. Cell phone according to claim 3 or 4, **characterised in that** the cell phone is an organizer.

6. Cell phone according to one of claims 3 to 5, **characterised in that** the antenna is active.

## Patentansprüche

1. Verfahren zur Kommunikation, umfassend die folgenden Schritte:
- Bereitstellen eines Mobiltelefons (4), das einen Körper, eine entfernbare Batterie, zumindest eine Antenne (11) und zumindest zwei Kontakte (A4, A8), die mit der Antenne (11) verbunden sind, umfaßt;
- Bereitstellen einer Chipkarte (1), die einen Chip (21) umfaßt, welcher aufweist:
- zumindest zwei Oberflächenkontakte (C4, C8);
- ein Verarbeitungsmodul (25);
- eine Radiofrequenzschnittstelle (22), die dem Verarbeitungsmodul (25) zugeordnet ist und mit zwei Oberflächenkontakten (C4, C8) der Karte (1) verbunden ist, wobei die Oberflächenkontakte der Karte mit den Kontakten (A4, A8) des Telefons gekoppelt sind;
- Übertragen der elektrischen Signale zwischen den Oberflächenkontakten der Karte und der Antenne;
**dadurch gekennzeichnet, daß**:
- die Antenne aus einem Stück mit der entfernbaren Batterie ist und sich außerhalb des Chips befindet.

2. Verfahren nach Anspruch 1, **dadurch gekennzeichnet, daß** die bereitgestellte Chipkarte das Format der ISO-Norm 7816-2 umfaßt und **dadurch**, daß die Oberflächenkontakte der Karte die Kontakte C4 und C8 sind.

3. Mobiltelefon (4), umfassend:
- einen Körper (5);
- eine entfernbare Batterie;
- eine Antenne (11);
- eine Kopplungsschnittstelle (A1-A8), die dazu eingerichtet ist, mit einer Chipkarte (1) gekoppelt zu werden, und die zwei Kontakte (A4, A8) aufweist, die mit der Antenne (11) verbunden sind und dazu eingerichtet sind, mit Oberflächenkontakten (C4, C8) der Chipkarte (1) gekoppelt zu werden;
**dadurch gekennzeichnet, daß**:
- die Antenne aus einem Stück mit der entfernbaren Batterie ist.

4. Mobiltelefon nach Anspruch 3, **dadurch gekennzeichnet, daß**:
- die Kontakte des Telefons dazu eingerichtet sind, mit den Kontakten C4 und C8 einer Chipkarte des Formats der ISO-Norm 7816-2 gekoppelt zu werden.

5. Mobiltelefon nach Anspruch 3 oder 4, **dadurch gekennzeichnet, daß** das Mobiltelefon ein Organizer ist.

6. Mobiltelefon nach einem der Ansprüche 3 bis 5, **dadurch gekennzeichnet, daß** die Antenne aktiv ist.
